# FASCICULE DE BREVET EUROPEEN

(11) **EP 1 737 157 B1**
(45) Date de publication et mention de la délivrance du brevet: **01.10.2008**
(21) Numéro de dépôt: 06012993.9
(22) Date de dépôt: 23.06.2006
(51) Int. Cl.: H04L 12/14

(54) **Dispositif de contrôle de transfert d'unités de temps de connexion entre terminaux de réseau(x) de communication**
Vorrichtung zur Kontrolle des Transfers von Verbindungszeiteinheiten zwischen Endgeräten in Kommunikationsnetzen
Device for controlling the transfer of connection time units among terminals in communication networks

(30) Priorité: 23.06.2005 FR 0551724
(43) Date de publication de la demande: 27.12.2006
(73) Titulaire: Alcatel Lucent, 75008 Paris (FR)
(72) Inventeur: Clevy, Laurent M., 28000 Chartres (FR); Mongazon-Cazavet, Bruno M., 91240 St. Michel-sur-Orge (FR)
(74) Mandataire: Korakis-Ménager, Sophie

(56) Documents cités:
- WO-A-20/04015973
- US-A1- 2003 045 267
- US-B1- 6 424 706
- US-B1- 6 564 047

## Description

L'invention concerne les réseaux de communication, et plus particulièrement l'attribution d'unités de temps de connexion à des terminaux de communication rattachés à des réseaux de communication, notamment de type mobile (ou cellulaire).

On entend ici par « terminal de communication » tout équipement de communication fixe ou mobile (ou portable) capable d'échanger des données sous la forme de signaux en consommant des unités de temps de connexion (imputées à son identifiant de communication), soit avec un autre terminal ou équipement de réseau, via leur(s) réseau(x) de rattachement, soit avec son propre réseau de rattachement. Il pourra donc s'agir, par exemple, de téléphones fixes ou mobiles, ou d'ordinateurs fixes ou portables ou d'assistants personnels numériques (ou PDA) équipés d'un module de communication.

Par ailleurs, on entend ici par « unité de temps de connexion » l'équivalent en temps de communication (ou connexion) d'une quantité d'argent fixée.

De nombreux opérateurs de réseau, notamment de type mobile (ou cellulaire), proposent à leurs clients des forfaits qui leurs permettent d'établir des communications dont la durée cumulée (qui correspond à une quantité d'unités), généralement sur une période fixée, est prédéflnie. Par exemple, il existe des forfaits offrant deux ou trois heures de communication par mois, ou une heure de communication sur une durée illimitée.

Lorsqu'un client dispose d'un forfait et qu'il a consommé la quasi-totalité des unités correspondantes avant l'expiration de la période correspondante, plusieurs solutions s'offrent à lui. Il peut par exemple continuer à consommer des unités qui lui seront facturées par l'opérateur à l'expiration de la période sous la forme d'un coût additionnel fonction du nombre d'unités consommées au-delà de la quantité prédéfinie. Il peut également emprunter le terminal de communication d'une autre personne qui n'a pas encore épuisé les unités de son forfait. Il peut également racheter des unités auprès de son opérateur, ou bien demander à une autre personne de lui acheter des unités auprès de son opérateur. Le document US 6,424,706 B1 (23 juillet 2002) décrit un mécanisme permettant à un utilisateur donateur de transférer des unités de temps la connexion d'un compte donateur vers le compte bénéficiaire d'un autre utilisateur à la requête dudit utilisateur donateur.

Aucune de ces solutions ne permet qu'un utilisateur appelant puisse requérir un transfert automatique d'unités de temps de connexion d'un compte donateur vers son compte bénéficiaire.

L'invention a donc pour but d'améliorer la situation, et notamment de permettre à un client donateur de transférer sur le compte d'un bénéficiaire, client de son opérateur ou d'un autre opérateur, une partie au moins des unités qu'il n'a pas consommées à la requête de l'utilisateur bénéficiaire.

Elle propose à cet effet un dispositif de contrôle de transfert d'unités de temps de connexion tel que défini dans la revendication 1.

L'invention propose également un procédé de transfert d'unités de temps de connexion tel que défini dans la revendication 23.

L'invention est particulièrement bien adaptée, bien que de façon non exclusive, aux réseaux de communication mobile ou cellulaire. L'invention concerne en effet tous les réseaux de communication pratiquant une tarification et une utilisation basée sur un système de crédit d'unités de tempos imputées à l'identifiant de communication des terminaux de communication, qui y sont rattachés.

D'autres caractéristiques et avantages de l'invention apparaîtront à l'examen de la description détaillée d'après, et des dessins annexés, sur lesquels :

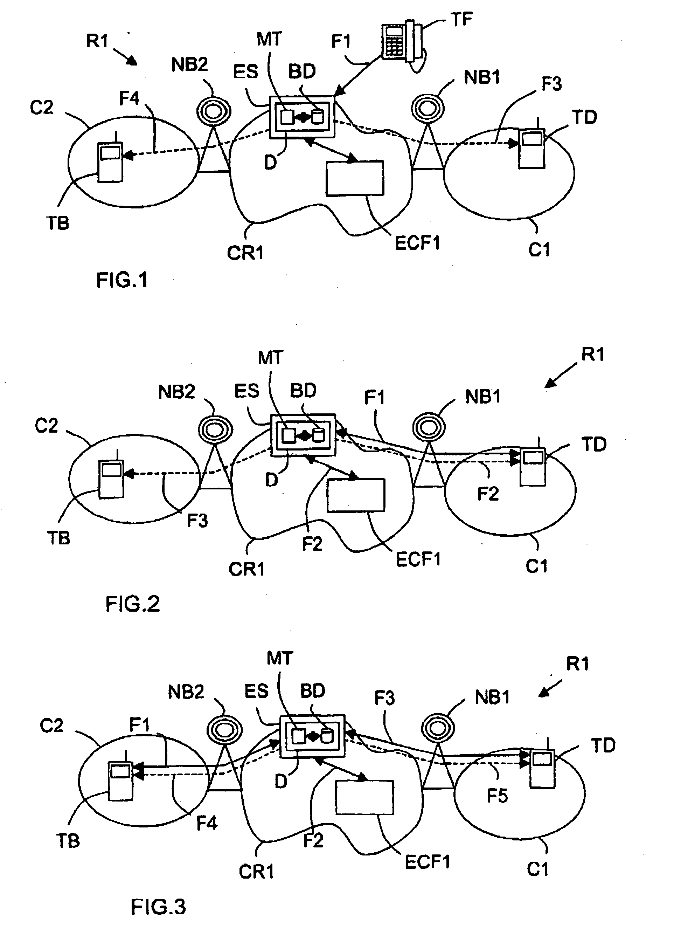

- la figure 1 illustre de façon très schématique un réseau mobile équipé d'un exemple de réalisation d'un dispositif de contrôle selon l'invention, et les liaisons entre terminaux de communication et ledit dispositif permettant d'enregistrer un terminal mobile en tant que donateur.
- la figure 2 illustre de façon très schématique un réseau mobile équipé d'un exemple de réalisation d'un dispositif de contrôle et les liaisons entre terminaux de communication et ledit dispositif permettant à un terminal mobile donateur, à sa propre initiative, de transférer des unités de temps de connexion de son propre compte vers le compte d'un terminal mobile bénéficiaire,
- la figure 3 illustre de façon très schématique un réseau mobile équipé d'un exemple de réalisation d'un dispositif de contrôle selon l'invention, et les liaisons entre terminaux de communication et ledit dispositif permettant à un terminal mobile donateur de transférer des unités de temps de connexion de son propre compte vers le compte d'un terminal mobile bénéficiaire, consécutivement à la demande de ce dernier,

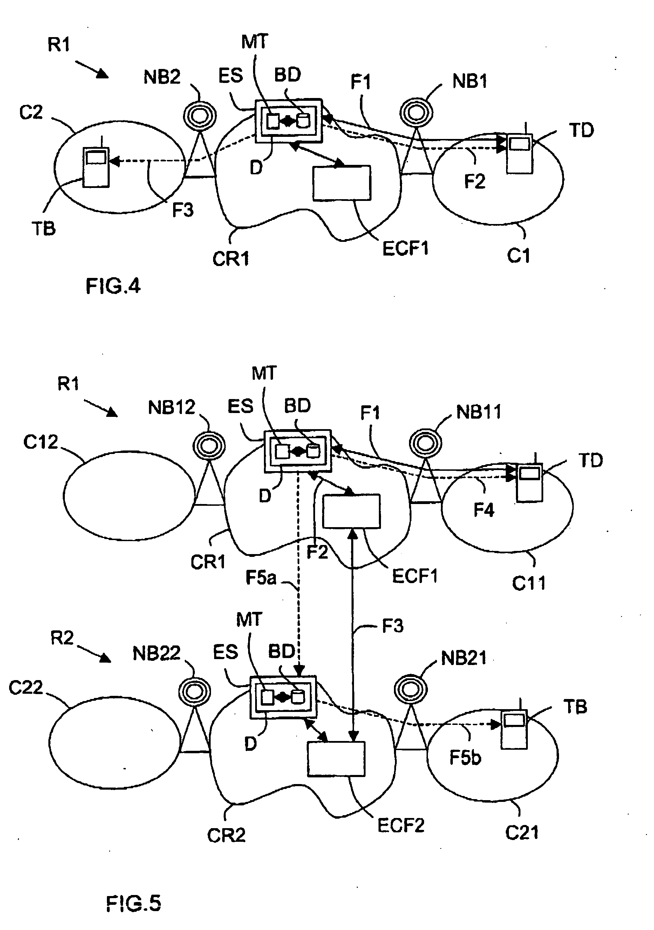

- la figure 4 illustre de façon très schématique un réseau mobile équipé d'un exemple de réalisation d'un dispositif de contrôle selon l'invention, et les liaisons entre terminaux de communication et ledit dispositif permettant à un terminal mobile donateur de modifier la liste de ses terminaux mobiles bénéficiaires et/ou une option relative au transfert d'unités de temps de connexion vers ces derniers, et
- la figure 5 illustre de façon très schématique deux réseaux mobiles équipés chacun d'un exemple de réalisation d'un dispositif de contrôle selon l'invention, et les liaisons entre terminaux de communication et lesdits dispositifs permettant à un terminal mobile donateur rattaché à l'un des réseaux, à sa propre initiative, de transférer des unités de temps de connexion de son propre compte vers le compte d'un terminal mobile bénéficiaire rattaché à l'autre réseau.

Les dessins annexés pourront non seulement servir à compléter l'invention, mais aussi contribuer à sa définition, le cas échéant.

L'invention a pour objet de permettre le transfert sur le compte d'un terminal de communication, appartenant à un bénéficiaire et rattaché à un réseau de communication, d'une partie au moins des unités de temps de connexion qui sont stockées sur le compte d'un autre terminal de communication, appartenant à un donateur et rattaché à ce même réseau de communication ou à un autre, à l'initiative du bénéficiaire.

Dans ce qui suit, on considère à titre d'exemple non limitatif que chaque réseau de communication est un réseau mobile (ou cellulaire), comme par exemple un réseau de type UMTS. Mais, l'invention n'est pas limitée à ce type de réseau mobile. Elle concerne en effet tous les types de réseau mobile, et notamment ceux de type GSM, GPRS/EDGE, CDMA 2000 ou WCDMA. Par ailleurs, l'invention n'est pas limitée aux réseaux mobiles. Elle concerne en effet tous les types de réseau de communication, fixes ou sans fil, dans lesquels des terminaux de communication disposent d'une quantité d'unités de temps de connexion, définie par un forfait (par exemple), pour établir des communications.

On considère par ailleurs dans ce qui suit que les terminaux de communication qui sont impliqués dans le transfert d'unités (de temps de connexion) sont des terminaux mobiles. Mais, l'invention n'est pas limitée à ce type de terminal de communication. Elle concerne en effet tout équipement de communication fixe ou mobile (ou portable) pouvant échanger des données sous la forme de signaux en consommant des unités de temps de connexion.

On se réfère tout d'abord à la figure 1 pour présenter un premier exemple de mise en oeuvre de l'invention au sein d'un unique réseau mobile R1 disposant d'un équipement de comptabilité et/ou facturation ECF1 chargé classiquement de gérer les comptes des terminaux mobiles des clients et de facturer ces derniers. Chaque client de l'opérateur du réseau R1 dispose d'un terminal mobile associé à un identifiant de communication, comme par exemple un numéro de téléphone, et pouvant consommer de façon forfaitaire une quantité prédéfinie d'unités (de temps de connexion) stockées dans un compte géré par l'équipement de comptabilité et/ou facturation ECF1 et associé à l'identifiant de communication du terminal mobile.

L'invention propose d'implanter un dispositif D de contrôle de transfert d'unités de temps de connexion au sein d'un réseau de communication R1. Ce dispositif peut être implanté dans un équipement de services ES, comme par exemple un serveur de service, lui-même implanté dans le coeur de réseau (ou « core network ») CR1, ou bien couplé à ce dernier.

Ce dispositif D comprend un module de traitement MT chargé, chaque fois qu'il reçoit une demande de transfert d'une quantité choisie d'unités de temps de connexion au profit du compte d'un terminal mobile TB appartenant à un client bénéficiaire, d'accéder à l'équipement ECF1 (qui gère ici les comptes des terminaux mobiles des clients donateur et des clients bénéficiaires) afin de vérifier si la quantité d'unités de temps de connexion dont dispose le terminal d'un donateur est au moins égale à la quantité d'unités choisie, et dans l'affirmative d'ordonner à l'équipement ECF1 de procéder au transfert en temps réel du compte du terminal donateur vers le compte du terminal bénéficiaire d'une quantité d'unités de temps de connexion au plus égale à la quantité choisie.

Préférentiellement, seuls les clients qui sont enregistrés auprès du dispositif D peuvent agir en tant que donateur et donc bénéficier du service (gratuit ou payant) de transfert d'unités offert par leur réseau de rattachement R1.

La procédure d'enregistrement consiste à fournir à l'opérateur du réseau R1 au moins l'identifiant de communication d'un terminal mobile TD d'un client donateur.

On appelle ci-après « terminal donateur » TD et « terminal bénéficiaire » TB les terminaux respectifs d'un client donateur et d'un client bénéficiaire. De même, on appelle ci-après « compte donateur » et « compte bénéficiaire » les comptes qui sont respectivement associés aux terminaux donateur et bénéficiaire.

Les données définissant l'identifiant de communication d'un terminal donateur TD sont stockées dans des moyens de mémorisation BD du dispositif D, qui peuvent se présenter sous n'importe quelle forme, et notamment sous la forme d'une base de données.

De nombreuses autres données (optionnelles) peuvent être stockées dans la base de données BD en correspondance des données définissant les identifiants de communication des terminaux donateurs TD, de manière à définir une table de correspondance. Ainsi, on peut prévoir des données signalant que le compte donateur peut être utilisé pour le transfert d'unités vers n'importe quel compte bénéficiaire. En variante, on peut prévoir des données signalant qu'un compte donateur ne peut être utilisé que pour le transfert d'unités vers au moins un compte bénéficiaire. On peut également prévoir des données signalant que l'identifiant de communication d'un terminal donateur TD et/ou le nom du donateur peuvent être, ou ne peuvent pas être, communiqués à un client bénéficiaire. On peut également prévoir des données définissant la quantité d'unités d'un compte donateur qui peut être transférée sur un compte bénéficiaire soit à chaque transfert, soit pendant une durée choisie. On peut également prévoir des données définissant un mot de passe pour le client donateur. On peut également prévoir des données signalant que le client donateur autorise les transferts d'unités (conformément aux modalités définies par d'autres données optionnelles) sans que son terminal donateur TD ne fasse l'objet d'une demande d'accord préalable. On peut également prévoir des données signalant que le client donateur souhaite étendre le service de transfert à un ou plusieurs autres opérateurs afin de faire bénéficier des transferts d'unités des terminaux bénéficiaires rattachés aux réseaux de communication d'autres opérateurs que le sien. On peut également prévoir des données définissant des niveaux de priorité entre terminaux donateurs.

Il est important de noter qu'un identifiant (de communication) de terminal donateur peut être associé à plusieurs identifiants de terminaux bénéficiaires et qu'inversement un identifiant de terminal bénéficiaire peut être associé à plusieurs identifiants de terminaux donateurs.

Toutes ces données, destinées à être stockées dans la base de données BD, peuvent être communiquées à l'opérateur par n'importe quel moyen, et notamment par courrier, éventuellement électronique, par téléphone, ou oralement dans une agence de l'opérateur.

Dans l'exemple illustré sur la figure 1, le client donateur utilise un téléphone fixe TF (flèche F1) pour communiquer les données nécessaires au transfert d'unités à l'équipement de service ES qui contient le dispositif D. L'équipement de service ES peut par exemple disposer d'un serveur vocal guidant le client donateur dans la fourniture des données indispensables (identifiant du terminal donateur TD et de préférence mot de passe) et optionnelles. Dans une variante, le client donateur pourrait utiliser son téléphone mobile TD, qui est ici momentanément localisé dans la cellule C11 du réseau R1, contrôlée par le Node B NB1 du réseau R1.

Une fois que le client a terminé de communiquer ses donnèes de transfert, celles-ci sont stockèes dans la base de données BD du dispositif D. Le terminal du client est alors enregistré en tant que donateur potentiel.

Préférentiellement, une fois qu'un terminal client a été enregistré auprès du dispositif D. le module de traitement MT de ce dernier génère un message d'avertissement à destination du terminal donateur TD désigné par le client, pour lui signaler qu'il a été enregistré en tant que donateur et qu'il peut désormais être impliqué dans des transferts d'unités, et/ou, si le client donateur l'a autorisé, un message d'avertissement à destination de chaque terminal bénéficiaire TB éventuellement désigné par le client, pour lui signaler qu'un donateur l'a désigné en tant que bénéficiaire potentiel et qu'il peut désormais bénéficier de transferts d'unités.

Par exemple, et comme illustré sur la figure 1, des messages d'avertissement courts de type SMS («Short Message Services ») peuvent être générés par le module de traitement MT à destination du terminal donateur TD (flèche en pointillés F2) et/ou du terminal bénéficiaire TB (flèche en pointillés F3)

Les demandes de transfert d'unités peuvent se faire à l'initiative soit d'un terminal donateur TD, soit d'un terminal bénéficiaire TB.

On se réfère maintenant à la figure 2 pour présenter un exemple de transfert d'unités à l'initiative d'un terminal donateur TD.

Dans cet exemple, l'utilisateur d'un terminal donateur TD (ici momentanément localisé dans la cellule C11 du réseau R1) souhaite transférer une quantité choisie d'unités de son compte donateur vers le compte bénéficiaire d'un terminal bénéficiaire TB (ici momentanément localisé dans la cellule C12 du réseau R1). Pour ce faire, le terminal donateur TD peut par exemple établir une liaison téléphonique radio avec le dispositif D (en fait avec l'équipement de service ES dans lequel il est implanté et qui est joignable au moyen de son identifiant de communication), via le Node B NB1 qui contrôle la cellule C11 dans laquelle il se trouve (flèche F1). Cette liaison F1 permet au terminal donateur TD de communiquer au module de traitement MT du dispositif D son identifiant de communication, l'identifiant de communication du terminal bénéficiaire TB, la quantité choisie d'unités, ainsi qu'éventuellement son mot de passe et d'autres données par exemple relatives à l'autorisation de divulguer son identifiant et/ou son nom auprès du bénéficiaire (si cette option n'a pas été définie préalablement, lors de l'enregistrement). Il est important de noter que le terminal donateur TD peut transmettre les données nécessaires au transfert par SMS ou par service électronique plutôt qu'au moyen d'une liaison téléphonique radio.

A réception des données du donateur, le module de traitement MT vérifie dans sa base de données BD que l'identifiant fourni par le donateur demandeur y est enregistré et que le mot de passe fourni est identique à celui qui est stocké en correspondance dudit identifiant. Si ce n'est pas le cas, le module de traitement MT peut par exemple rejeter la demande ou bien proposer au client de s'enregistrer ou de communiquer de nouveau certaines au moins des données. En revanche, si les données correspondent le module de traitement MT accède à l'équipement ECF1 (qui gère ici les comptes du terminal donateur TD et du terminal bénéficiaire TB) afin de vérifier si la quantité d'unités dont dispose le terminal donateur demandeur est au moins égale à la quantité d'unités choisie.

Dans l'affirmative, le module de traitement MT établit une liaison avec l'équipement ECF1 (flèche F2), afin de lui ordonner de procéder au transfert en temps réel de la quantité choisie d'unités du compte donateur vers le compte bénéficiaire. L'équipement ECF1 débite te compte donateur de la quantité choisie d'unités afin de créditer le compte bénéficiaire de cette même quantité choisie d'unités. Le terminal bénéficiaire TB peut alors en disposer immédiatement.

Préférentiellement, et comme illustré sur la figure 2, des messages d'avertissement courts de type SMS (« Short Message Service ») sont ensuite générés par le module de traitement MT et transmis, via les Node Bs NB1 et NB2, au terminal donateur TD (flèche en pointillés F3) et/ou au terminal bénéficiaire TB (flèche en pointillés F4), afin de leur signaler que le transfert d'unités a été effectué. Le message adressé au terminal bénéficiaire TB (flèche F4) contient la quantité d'unités transférée, ainsi qu'éventuellement l'identifiant du terminal donateur TD et/ou le nom du donateur si le module de traitement MT est autorisé à le faire.

Si la quantité d'unités dont dispose le donateur demandeur sur son compte donateur est inférieure à la quantité d'unités choisie, deux situations peuvent être envisagées : le module de traitement MT peut rejeter la demande de transfert (et le signaler au terminal donateur TD via la liaison établie (flèche F1) ou au moyen d'un message court de type SMS), ou le module de traitement MT peut proposer au terminal donateur TD (via la liaison établie (flèche F1) ou au moyen d'un message court de type SMS) d'acheter des unités. Dans cette dernière situation, soit le terminal donateur D refuse l'achat et la demande de transfert est rejetée, soit le terminal donateur D accepte l'achat et indique la quantité d'unités qu'il souhaite acheter et de préférence son mot de passe. Dans ce dernier cas, le module de traitement MT accède à l'équipement ECF1 afin de lui demander de créditer le compte donateur de la quantité d'unités spécifiée et de lui facturer cette quantité. La procédure de transfert d'unités peut alors se poursuivre comme indiqué ci-avant.

On se réfère maintenant à la figure 3 pour présenter un exemple de transfert d'unités à l'initiative d'un terminal bénéficiaire TB.

Dans cet exemple, l'utilisateur d'un terminal bénéficiaire TB (ici momentanément localisé dans la cellule C12 du réseau R1) souhaite qu'un donateur transfère vers son compte bénéficiaire une quantité choisie d'unités stockée sur son compte donateur.

Pour ce faire, le terminal bénéficiaire TB peut par exemple établir une liaison téléphonique radio avec le dispositif D (en fait avec l'équipement de service ES dans lequel il est implanté), via le Node B NB2 qui contrôle la cellule C12 dans laquelle il se trouve (flèche F1). Cette liaison F1 permet au terminal bénéficiaire TB de communiquer au module de traitement MT du dispositif D son identifiant de communication, la quantité choisie d'unités, ainsi qu'éventuellement d'autres données, comme par exemple un message de type « très urgent ». Il est important de noter que le terminal bénéficiaire TB peut transmettre les données nécessaires au transfert par SMS ou par service électronique plutôt qu'au moyen d'une liaison téléphonique radio.

A réception des données du bénéficiaire, le module de traitement MT détermine dans sa base de données BD si l'identifiant fourni par le bénéficiaire demandeur y est enregistré en correspondance de l'identifiant d'au moins un terminal donateur TD. Si ce n'est pas le cas, le module de traitement MT rejette la demande. En revanche, si c'est le cas deux situations peuvent être envisagées selon que l'identifiant fourni par le bénéficiaire demandeur est enregistré en correspondance d'un ou plusieurs identifiants de terminal donateur TD.

S'il n'existe qu'un identifiant de terminal donateur TD, le module de traitement MT détermine tout d'abord dans la base de données BD si le donateur a spécifié des modalités de transfert.

Si par exemple le donateur souhaite que le transfert se fasse automatiquement sans qu'il ait à donner son accord, et que la quantité choisie d'unités est inférieure ou égale à la quantité autorisée, le module de traitement MT accède à l'équipement ECF1 (qui gère ici les comptes du terminal donateur TD et du terminal bénéficiaire TB) afin de vérifier si la quantité d'unités dont dispose le donateur est au moins égale à la quantité d'unités choisie.

Dans l'affirmative, le module de traitement MT établit une liaison avec l'équipement ECF1 (flèche F2), afin de lui ordonner de procéder au transfert en temps réel de la quantité choisie d'unités du compte donateur vers le compte bénéficiaire. L'équipement ECF1 débite le compte donateur de la quantité choisie d'unités afin de créditer le compte bénéficiaire de cette même quantité choisie d'unités. Le bénéficiaire peut alors en disposer immédiatement.

Préférentiellement, et comme illustré sur la figure 3, des messages d'avertissement courts de type SMS sont ensuite générés par le module de traitement MT et transmis, via les Node Bs NB2 et NB1, au terminal bénéficiaire TB (flèche en pointillés F4) et/ou au terminal donateur TD (flèche en pointillés F5), afin de leur signaler que le transfert d'unités a été effectué. Le message adressé au terminal donateur TD (flèche F5) contient par exemple la quantité d'unités transférée, ainsi que l'identifiant du terminal bénéficiaire TB et/ou le nom du bénéficiaire.

Si la quantité d'unités dont dispose le terminal donateur TD sur son compte donateur est inférieure à la quantité d'unités choisie, deux situations peuvent être envisagées : le module de traitement MT peut rejeter la demande de transfert (et le signaler au terminal bénéficiaire TB via la liaison établie (flèche F1) ou au moyen d'un message court de type SMS), ou le module de traitement MT peut proposer au terminal donateur TD (via une liaison téléphonique (flèche F3) ou au moyen d'un message court de type SMS) d'acheter des unités. Dans cette dernière situation, soit le terminal donateur D refuse l'achat et la demande de transfert est rejetée, soit le terminal donateur D accepte l'achat et indique la quantité d'unités qu'il souhaite acheter et de préférence son mot de passe. Dans ce dernier cas, le module de traitement MT accède à l'équipement ECF1 afin de lui demander de créditer le compte donateur de la quantité d'unités spécifiée et de lui facturer cette quantité. La procédure de transfert d'unités peut alors se poursuivre comme indiqué ci-avant.

Si le donateur a demandé que son accord soit requis avant tout transfert (ou avant le transfert vers le terminal bénéficiaire demandeur), le module de traitement MT établit une liaison téléphonique avec le terminal donateur TD ou transmet un message court de type SMS à ce dernier (flèche F3) afin de lui communiquer la quantité d'unités demandée (choisie), l'identifiant du terminal bénéficiaire demandeur TB et/ou le nom du bénéficiaire, et solliciter son accord.

Si le terminal donateur refuse le transfert ou s'il ne répond pas pendant une durée supérieure à un seuil choisi la demande de transfert est rejetée. Le terminal bénéficiaire est alors averti du rejet soit par téléphone soit par un message court de type SMS.

Si le terminal donateur accepte le transfert, on est ramené à la procédure de transfert décrite ci-avant et correspondant au cas où des données stockées spécifient que le donateur n'a pas à donner son accord préalable.

S'il existe plusieurs identifiants de terminal donateur, le module de traitement MT détermine au moins l'un d'entre eux en fonction d'au moins un critère choisi. Plusieurs critères peuvent être utilisés séparément ou en combinaison, et notamment un critère de disponibilité de terminal donateur, un critère de priorité reposant sur des niveaux de priorité attribués aux différents terminaux donateurs concernés et un critère de capacité reposant sur la quantité d'unités disponible sur les différents comptes donateurs concernés.

Si plusieurs terminaux donateurs ont été déterminés par le module de traitement MT, celui-ci propose au terminal bénéficiaire demandeur TB de sélectionner l'un d'entre eux, via une liaison téléphonique ou au moyen d'un message court de type SMS.

Si un unique terminal donateur a été déterminé par le module de traitement MT, c'est celui-ci qui est retenu pour le transfert.

La procédure de transfert décrite ci-avant, et correspondant au cas où il n'existe qu'un identifiant de terminal donateur stocké en correspondance de l'identifiant du terminal bénéficiaire demandeur, s'applique alors intégralement à ce stade avec le terminal donateur retenu par le module de traitement MT ou sélectionné par le terminal bénéficiaire TB.

Il est important de noter que le module de traitement MT peut être agencé de manière à effectuer une procédure de transfert d'unités, à l'initiative d'un terminal bénéficiaire TB, à condition que le compte bénéficiaire associé ne dispose pas d'une quantité d'unités supérieure à un seuil choisi. Pour ce faire, lorsque le module de traitement MT reçoit une demande de transfert d'unités de la part d'un terminal bénéficiaire TB il accède à l'équipement ECF1 afin de vérifier si la quantité d'unités stockée dans le compte bénéficiaire concerné est inférieure au seuil choisi. Si tel est le cas ta procédure de transfert se poursuit. Dans le cas contraire, la demande de transfert est rejetée et le terminal bénéficiaire demandeur TB en est averti par liai son téléphonique ou au moyen d'un message court de type SMS.

Lorsqu'un terminal bénéficiaire TB effectue une demande de transfert d'unités, il peut s'agir d'une situation d'urgence dans laquelle le nombre d'unités qui reste sur son compte bénéficiaire ne peut pas lui permettre d'établir la communication avec le dispositif D. Par conséquent, on peut envisager que le module de traitement MT soit agencé de manière à transférer le coût de la communication sur le compte donateur. Pour ce faire, le module de traitement MT ordonne à l'équipement ECF1 de débiter le compte donateur, à la place du compte bénéficiaire, d'une quantité d'unités de temps de connexion correspondant au coût de la communication initiée par le terminal bénéficiaire demandeur TB.

On peut aussi envisager qu'un terminal bénéficiaire TB ait accès gratuitement (de son point de vue) et automatiquement à un service d'urgence de demande de transfert d'unités dès lors qu'au moins un donateur l'autorise à procéder ainsi. En d'autres termes plutôt que de faire une espèce de demande de transfert en PCV, le transfert est accessible automatiquement, en cas d'urgence, à chaque terminal déclaré en tant que bénéficiaire par un donateur dès lors que ce dernier a souscrit au service d'urgence de transfert automatique d'unités et que les modalités (données) de la procédure d'urgence de demande de transfert d'unités ont été définies et enregistrées dans la base de données BD. Cela permet de « garantir » en cas d'urgence qu'un terminal bénéficiaire pourra effectuer sa demande de transfert d'unités. Ainsi, lorsqu'un terminal, dont le compte bénéficiaire ne dispose pas d'un nombre suffisant d'unités pour effectuer une demande de transfert d'unités, effectue une procédure d'urgence de demande de transfert d'unités, le module de traitement MT en est averti par le réseau On peut envisager que le terminal bénéficiaire compose un identifiant de communication d'urgence pour signaler qu'il veut effectuer la procédure d'urgence. Le module de traitement MT accède alors à la base de données BD pour déterminer si ce terminal est autorisé par un donateur à bénéficier de cette procédure d'urgence. Si ce n'est pas le cas, la procédure d'urgence est rejetée. En revanche, si c'est le cas le module de traitement MT autorise la mise en oeuvre de la procédure d'urgence et ordonne à l'équipement de comptabilité et/ou facturation ECF1 qui gère le compte du terminal donateur TD de débiter ce compte d'une quantité d'unités de temps de connexion correspondant au coût de la procédure d'urgence.

Afin d'éviter que des bénéficiaires utilisent fréquemment la procédure d'urgence dans le seul but de se faire transférer des unités par un ou plusieurs donateurs, on peut envisager qu'une procédure d'urgence ne puisse être utilisée par un bénéficiaire qu'un nombre choisi de fois dans un intervalle de temps donné. Cette option fait alors partie des modalités de transfert qui sont stockées sous forme de données dans la base de données BD.

On se réfère maintenant à la figure 4 pour présenter un exemple de modification de données associées à un terminal donateur TD enregistré dans la base de données BD. Toutes les données qui sont stockées dans la base de données BD peuvent être modifiées à la requête d'un terminal donateur TD.

Pour procéder à une modification de ses données de transfert, un terminal donateur TD établit tout d'abord une liaison téléphonique radio avec le dispositif D (en fait avec l'équipement de service ES dans lequel il est implanté), via le Node B NB1 qui contrôle la cellule (ici C11) dans laquelle il se trouve (flèche F1). Cette liaison F1 permet au terminal donateur TD de communiquer au module de traitement MT du dispositif D son identifiant de communication, ainsi qu'éventuellement son mot de passe, puis les informations qu'il souhaite modifier, ajouter ou supprimer. Par exemple, le donateur peut souhaiter ajouter et/ou supprimer de sa liste restreinte un ou plusieurs terminaux bénéficiaires, et/ou modifier la quantité d'unités qu'il accepte de transférer vers un terminal bénéficiaire donné à chaque fois ou sur une durée choisie. Le terminal donateur peut également demander à être supprimé de la base de données BD, afin de ne plus participer à des transferts d'unités.

A réception des informations fournies par le donateur, le module de traitement MT met à jour les données associées à l'identifiant de son terminal donateur TD dans la base de données BD.

Préférenfiellement, une fois que le module de traitement MT a mis à jour sa base de données BD, à la requête d'un donateur, il génère un message à destination de son terminal donateur TD pour lui signaler qu'il a procédé aux modifications requises (flèche en pointillés F2). Par exemple, ce message peut être un message court de type SMS.

Si les modifications impliquent au moins un terminal bénéficiaire TB, le module de traitement MT génère également, de préférence, un message à destination de chaque terminal bénéficiaire TB pour leur signaler la (les) modification(s) qui les conceme(nt) (flèche en pointillés F3). Par exemple, ce message peut être un message court de type SMS.

Dans la description qui précède, on a décrit un exemple de mise en oeuvre de l'invention dans le cas où les terminaux donateurs et bénéficiaires sont rattachés à un même réseau. Mais, l'invention peut être également mise en oeuvre dans le cas où les terminaux donateurs et bénéficiaires sont rattachés à des réseaux appartenant à des opérateurs différents. Une telle situation est schématiquement illustrée sur la figure 5, à titre d'exemple non limitatif.

Dans l'exemple illustré sur la figure 5, un premier R1 et un second R2 réseaux mobiles sont raccordés par leurs coeurs de réseau respectifs RC1 et RC2 et disposent chacun d'un équipement de comptabilité et/ou facturation ECF1, ECF2 gérant les comptes des terminaux mobiles de leurs clients respectifs.

Comme illustré, chaque réseau R1, R2 dispose d'un dispositif de contrôle D selon l'invention, du type de celui décrit précédemment. Ici, le module de traitement MT qui est implanté dans l'un des deux réseaux (par exemple R1) est capable d'établir une liaison non seulement avec l'équipement de comptabilité et/ou facturation ECF1 de son réseau R1, mais également avec l'équipement de comptabilité et/ou facturation ECF2 de l'autre réseau R2, soit « directement », soit indirectement via le dispositif de contrôle D de cet autre réseau R2. Par ailleurs, les deux équipements de comptabilité et/ou facturation ECF1 et ECF2 sont capables sur ordre d'un dispositif de contrôle D de s'échanger des données de manière à pouvoir créditer ou débiter un compte d'un terminal client de leur réseau par transfert d'unités.

Le fonctionnement des dispositifs de contrôle D est identique à celui décrit précédemment, et offre en complément la capacité d'établir des liaisons (directes ou indirectes) avec l'équipement de comptabilité et/ou facturation du réseau qui est couplé à leur propre réseau.

Dans l'exemple illustré sur la figure 5, un terminal donateur, localisé dans la cellule C11 du premier réseau R1 et rattaché à celui-ci, souhaite effectuer un transfert d'une quantité choisie d'unités de son compte donateur vers le compte bénéficiaire d'un terminal bénéficiaire TB, localisé dans la cellule C21 du second réseau R2 et rattaché à celui-ci.

On suppose ici que le terminal donateur TD est enregistré auprès du dispositif D du premier réseau R1 (la procédure d'enregistrement est sensiblement identique à celle décrite en référence au premier exemple).

Le terminal donateur TD établit tout d'abord une liaison téléphonique radio avec le dispositif D (en fait avec l'équipement de service ES dans lequel il est implanté), via le Node B NB11 qui contrôle la cellule C11 dans laquelle il se trouve (flèche F1). Cette liaison F1 permet au terminal donateur TD de communiquer au module de traitement MT du dispositif D du premier réseau R1 son identifiant de communication, l'identifiant de communication du terminal bénéficiaire TB, la quantité choisie d'unités, ainsi qu'éventuellement son mot de passe et d'autres données par exemple relatives à l'autorisation de divulguer son identifiant et/ou son nom auprès du bénéficiaire (si cette option n'a pas été définie préalablement, lors de l'enregistrement).

A réception des données du terminal donateur TD, le module de traitement MT du dispositif D du premier réseau R1 vérifie dans sa base de données BD que l'identifiant fourni par le terminal donateur demandeur TD y est enregistré et que le mot de passe fourni est identique à celui qui est stocké en correspondance dudit identifiant. Si ce n'est pas le cas, le module de traitement MT peut par exemple rejeter la demande ou bien proposer au client de s'enregistrer ou de communiquer de nouveau certaines au moins des données. En revanche, si les données correspondent le module de traitement MT accède à l'équipement ECF1 du premier réseau R1 (qui gère ici le compte du terminal donateur TD) (flèche 2) afin de vérifier si la quantité d'unités dont dispose le terminal donateur demandeur TD est au moins égale à la quantité d'unités choisie.

Dans l'affirmative, le module de traitement MT établit une liaison avec l'équipement ECF1 du premier réseau R1 pour lui ordonner de se connecter à l'équipement ECF2 du second réseau R2 (qui gère ici le compte du terminal bénéficiaire TB) (flèche 3), afin de procéder ensemble au transfert en temps réel de la quantité choisie d'unités du compte donateur vers le compte bénéficiaire. L'équipement ECF1 débite le compte donateur de la quantité choisie d'unités et l'équipement ECF2 crédite le compte bénéficiaire de cette même quantité choisie d'unités. Le terminal bénéficiaire TB peut alors en disposer immédiatement.

Préférentiellement, et comme illustré sur la figure 5, des messages d'avertissement courts de type SMS sont ensuite générés par le module de traitement MT et transmis, via les Node Bs NB11 (du réseau R1) et NB21 (du réseau R2), au terminal donateur TD (flèche en pointillés F4) et/ou au terminal bénéficiaire TB soit « directement », soit indirectement via le dispositif D du second réseau R2 (flèche en pointillés F5a et/ou F5b), afin de leur signaler que le transfert d'unités a été effectué. Le message adressé au terminal bénéficiaire TB (flèches F5a et/ou F5b) contient la quantité d'unités transférée, ainsi qu'éventuellement l'identifiant du terminal donateur TD et/ou le nom du donateur si le module de traitement MT du dispositif D du premier réseau R1 est autorisé à le faire.

Si la quantité d'unités dont dispose le terminal donateur demandeur TD sur son compte donateur est inférieure à la quantité d'unités choisie, deux situations peuvent être envisagées : le module de traitement MT peut rejeter la demande de transfert (et le signaler au terminal donateur TD via la liaison établie (flèche F1) ou au moyen d'un message court de type SMS), ou le module de traitement MT peut proposer au terminal donateur TD (via la liaison établie (flèche F1) ou au moyen d'un message court de type SMS) d'acheter des unités. Dans cette dernière situation, soit le terminal donateur D refuse l'achat et la demande de transfert est rejetée, soit le terminal donateur D accepte l'achat et indique la quantité d'unités qu'il souhaite acheter et de préférence son mot de passe. Dans ce dernier cas, le module de traitement MT accède à l'équipement ECF1 afin de lui demander de créditer le compte donateur de la quantité d'unités spécifiée et de lui facturer cette quantité. La procédure de transfert d'unités peut alors se poursuivre comme indiqué ci-avant.

La procédure de transfert d'unités à l'initiative d'un terminal bénéficiaire TB est similaire à celle décrite précédemment en référence à la figure 3, moyennant les adaptations évoquées ci-avant, imposées par le couplage des deux réseaux et par le fait qu'ils disposent d'équipements ECF1 et ECF2 distincts pour gérer les comptes des terminaux mobiles de leurs clients respectifs.

Le dispositif de contrôle D selon l'invention, et notamment son module de traitement MT, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle et procédé de contrôle décrits ci-avant, seulement à titre d'exemple, mais elle englobe toutes les variantes que pourra envisager l'homme de l'art dans le cadre des revendications ci-après.

## Revendications

1. Dispositif (D) de contrôle de transfert d'unités de temps de connexion pour un réseau de communication (R1) comportant un premier équipement de comptabilité et/ou facturation (ECF1), le dispositif comprenant i) des moyens de mémorisation (BD) propres à stocker des données définissant des tables de correspondance entre des identifiants de terminaux de communication donateurs (TD) et au moins un identifiant de terminal de communication bénéficiaire (TB) rattaché à un éventuel autre réseau de communication (R1 ; R2) et signalant qu'un donateur autorise l'utilisation par un terminal bénéficiaire (TB) d'une procédure d'urgence de demande de transfert d'unités lorsque son compte ne dispose plus de suffisamment d'unités pour effectuer une demande normale de transfert d'unités, ladite procédure d'urgence étant à la charge du compte donateur et se déroulant sans procédure de demande d'autorisation préalable, et ii) des moyens de traitement (MT) agencés, en cas de réception en provenance d'un terminal bénéficiaire (TB) associé à un compte bénéficiaire ne disposant pas d'un nombre suffisant d'unités pour lui permettre d'effectuer à sa charge une demande normale de transfert d'unités, d'une demande de transfert d'une quantité choisie d'unités de temps de connexion au profit dudit compte bénéficiaire dans le cadre d'une procédure d'urgence, associée à l'identifiant de communication dudit terminal bénéficiaire (TB), pour déterminer dans lesdits moyens de mémorisation (BD) l'identifiant de communication d'un terminal donateur (TD) rattaché audit réseau de communication (R1) et autorisant ledit terminal bénéficiaire (TB) à bénéficier de ladite procédure d'urgence, puis pour accéder audit premier équipement de comptabilité et/ou facturation (ECF1), gérant le compte du donateur associé à l'identifiant de communication dudit terminal donateur (TD), afin de vérifier si la quantité d'unités de temps de connexion dont ledit terminal donateur (TD) dispose est au moins égale à ladite quantité choisie, et dans l'affirmative pour autoriser la mise en oeuvre de la procédure d'urgence et ordonner audit premier équipement (ECF1) et à un éventuel autre équipement de comptabilité et/ou facturation (ECF1 ; ECF2) gérant ledit compte bénéficiaire de procéder au transfert en temps réel du compte donateur vers le compte bénéficiaire d'une quantité d'unités de temps de connexion au plus égale à ladite quantité choisie, et de débiter ledit compte donateur d'une quantité d'unités de temps de connexion correspondant au coût de ladite procédure d'urgence.

2. Dispositif selon la revendication 1, **caractérisé en ce que** lesdites tables de correspondance (BD) comportent des données signalant qu'un donateur autorise des transferts d'unités au profit de n'importe quel terminal de communication.

3. Dispositif selon l'une des revendications 1 et 2, **caractérisé en ce que** lesdites tables de correspondance (BD) comportent des données représentatives de la quantité d'unités de temps de connexion pouvant être transférée à chaque compte bénéficiaire.

4. Dispositif selon la revendication 3, **caractérisé en ce que** lesdites tables de correspondance (BD) comportent des données représentatives de la quantité d'unités de temps de connexion pouvant être transférée à chaque compte bénéficiaire soit pendant une durée choisie, soit à chaque demande de transfert d'unités.

5. Dispositif selon l'une des revendications 1 à 4, **caractérisé en ce que** lesdites tables de correspondance (BD) comportent des données signalant qu'un donateur autorise des transferts d'unités au profit d'un compte bénéficiaire sans procédure de demande d'autorisation préalable.

6. Dispositif selon l'une des revendications 1 à 5, **caractérisé en ce que** lesdites tables de correspondance (BD) comportent des données signalant qu'un donateur autorise des transferts d'unités au profit d'un compte bénéficiaire après demande d'autorisation préalable.

7. Dispositif selon l'une des revendications 1 à 6, **caractérisé en ce que** lesdites tables de correspondance (BD) comportent des données signalant qu'un donateur n'autorise pas la communication à un terminal bénéficiaire (TB) de l'identifiant de son terminal donateur (TD) et/ou de son nom.

8. Dispositif selon l'une des revendications 1 à 7, **caractérisé en ce que** lesdits moyens de traitement. (MT) sont agencés pour traiter une demande de transfert d'unités issue d'un terminal donateur (TD) et désignant au moins un terminal bénéficiaire (TB) et une quantité d'unités choisie.

9. Dispositif selon l'une des revendications 1 à 8, **caractérisé en ce que** lesdits moyens de traitement (MT) sont agencés pour traiter une demande de transfert d'unités issue d'un terminal bénéficiaire (TB) et désignant une quantité d'unités choisie.

10. Dispositif selon la revendication 9, **caractérisé en ce que** lesdits moyens de traitement (MT) sont agencés, à réception d'une demande de transfert d'une quantité d'unités choisie, ne désignant pas d'identifiant de terminal donateur (TD) et issue d'un terminal bénéficiaire (TB) dont l'identifiant est associé dans ladite table de correspondance (BD) à au moins deux identifiants de terminaux de communication de donateurs, pour proposer au terminal bénéficiaire demandeur (TB) de sélectionner l'un desdits terminaux donateurs.

11. Dispositif selon la revendication 10, **caractérisé en ce que** lesdits moyens de traitement (MT) sont agencés pour déterminer parmi plusieurs terminaux donateurs possibles au moins l'un d'entre eux en fonction d'au moins un critère choisi, de manière à proposer audit terminal bénéficiaire demandeur (TB) chaque terminal donateur vérifiant chaque critère choisi.

12. Dispositif selon la revendication 11, **caractérisé en ce que** lesdits critères sont choisis dans un groupe comportant au moins une disponibilité de terminal de communication, un niveau de priorité et une quantité d'unités disponibles.

13. Dispositif selon l'une des revendications 9 à 12, **caractérisé en ce que** lesdits moyens de traitement (MT) sont agencés pour rejeter une demande de transfert d'unités en cas de refus du terminal donateur sélectionné (TD) ou en l'absence de réponse du terminal donateur sélectionné (TD) pendant une durée supérieure à un seuil choisi.

14. Dispositif selon l'une des revendications 9 à 13, **caractérisé en ce que** lesdits moyens de traitement (MT) sont agencés, en cas d'accord d'un terminal donateur (TD) pour transférer une quantité d'unités inférieure à ladite quantité choisie, pour ordonner le transfert de la quantité d'unités accordée du compte du donateur vers le compte du bénéficiaire, éventuellement après transmission au terminal bénéficiaire (TB) d'une demande d'accord relative à ladite quantité d'unités accordée et après réception d'un accord dudit terminal donateur (TD).

15. Dispositif selon l'une des revendications 9 à 14, **caractérisé en ce que** lesdits moyens de traitement (MT) sont agencés, à réception d'une demande de transfert d'unités émanant d'un terminal bénéficiaire (TB), pour accéder à l'équipement de comptabilité et/ou facturation (ECF1 ;ECF2), gérant le compte dudit terminal bénéficiaire (TB), et pour autoriser ledit transfert lorsque la quantité d'unités stockée dans ledit compte bénéficiaire est inférieure à un seuil choisi.

16. Dispositif selon l'une des revendications 9 à 15, **caractérisé en ce que** lesdits moyens de traitement (MT) sont agencés pour ordonner à l'équipement de comptabilité et/ou facturation (ECF1), gérant le compte du terminal donateur (TD), de débiter ce compte d'une quantité d'unités de temps de connexion correspondant au coût de la communication initiée par ledit terminal bénéficiaire (TB), sans que le compte dudit terminal bénéficiaire (TB) ne soit débité, de sorte que ladite communication soit à la charge du terminal donateur (TD).

17. Dispositif selon l'une des revendications 1 à 16, **caractérisé en ce que** lesdits moyens de traitement (MT) sont agencés, lorsque la quantité d'unités disponible sur le compte du terminal donateur (TD), impliqué dans ledit transfert, est inférieure à ladite quantité choisie, pour adresser audit terminal donateur (TD) une proposition d'achat d'unités de temps de connexion, et en cas d'accord dudit terminal donateur (TD) pour adresser à l'équipement de comptabilité et/ou facturation (ECF1), gérant le compte dudit terminal donateur (TD), une demande d'attribution à ce compte d'une quantité d'unités spécifiée moyennant une facturation dudit donateur, puis pour ordonner ledit transfert d'unités.

18. Dispositif selon l'une des revendications 1 à 17, **caractérisé en ce que** lorsqu'un transfert d'unités est conditionné à l'accord préalable du terminal donateur (TD), lesdits moyens de traitement (MT) sont agencés pour ordonner ledit transfert d'unités si ledit accord du terminal donateur (TD) est accompagné d'un mot de passe confidentiel.

19. Dispositif selon l'une des revendications 1 à 18, **caractérisé en ce que** lesdits moyens de traitement (MT) sont agencés pour traiter des demandes de transfert d'unités se présentant sous la forme d'appels téléphoniques, de messages courts de type SMS, de messages électronique ou de services électroniques.

20. Dispositif selon l'une des revendications 1 à 19, **caractérisé en ce que** lesdits moyens de traitement (MT) sont agencés pour communiquer avec lesdits terminaux donateurs (TD) et/ou bénéficiaires (TB) au moyen de messages courts de type SMS.

21. Dispositif selon l'une des revendications 1 à 20, **caractérisé en ce que** lesdits terminaux de communication donateur (TD) et bénéficiaire (TB) sont rattachés à un même réseau (R1), appartenant à un opérateur, et lesdits compte donateur et compte bénéficiaire sont gérés par un même équipement de comptabilité et/ou facturation (ECF1) accessible par un identifiant de communication.

22. Dispositif selon l'une des revendications 1 à 21, **caractérisé en ce que** lesdits terminaux de communication donateur (TD) et bénéficiaire (TB) sont rattachés à des réseaux différents (R1,R2), appartenant à des opérateurs différents, et lesdits compte donateur et compte bénéficiaire sont gérés par des équipements de comptabilité et/ou facturation différents (ECF1,ECF2) accessibles par des identifiants de communication différents.

23. Procédé de transfert d'unités de temps de connexion, le procédé consistant i) à stocker dans des moyens de mémorisation (BD) des données définissant des tables de correspondance entre des identifiants de terminaux de communication donateurs (TD) et au moins un identifiant de terminal de communication bénéficiaire (TB) rattaché à un réseau de communication (R1 ; R2) et signalant qu'un donateur autorise l'utilisation par un terminal bénéficiaire (TB) d'une procédure d'urgence de demande de transfert d'unités lorsque son compte ne dispose plus de suffisamment d'unités pour effectuer une demande normale de transfert d'unités, ladite procédure d'urgence étant à la charge du compte donateur et se déroulant sans procédure de demande d'autorisation préalable, et ii) en cas de réception en provenance d'un terminal bénéficiaire (TB) associé à un compte bénéficiaire ne disposant pas d'un nombre suffisant d'unités pour lui permettre d'effectuer à sa charge une demande normale de transfert d'unités, d'une demande de transfert d'une quantité choisie d'unités de temps de connexion au profit dudit compte bénéficiaire dans le cadre d'une procédure d'urgence, associée à l'identifiant de communication dudit terminal bénéficiaire (TB), à déterminer dans lesdits moyens de mémorisation (BD) l'identifiant de communication d'un terminal donateur (TD) rattaché à un éventuel autre réseau de communication (R1) et autorisant ledit terminal bénéficiaire (TB) à bénéficier de ladite procédure d'urgence, puis à accéder à un premier équipement de comptabilité et/ou facturation (ECF1), gérant le compte du donateur associé à i'identifiant de communication dudit terminal donateur (TD), afin de vérifier si la quantité d'unités de temps de connexion dont ledit terminal donateur (TD) dispose est au moins égale à ladite quantité choisie, et dans l'affirmative à autoriser la mise en oeuvre de la procédure d'urgence et à ordonner audit premier équipement (ECF1) et à un éventuel autre équipement de comptabilité et/ou facturation (ECF1 ;ECF2) gérant ledit compte bénéficiaire de procéder au transfert en temps réel du compte donateur vers le compte bénéficiaire d'une quantité d'unités de temps de connexion au plus égale à ladite quantité choisie, et de débiter ledit compte donateur d'une quantité d'unités de temps de connexion correspondant au coût de ladite procédure d'urgence.

## Claims

1. A control device (D) for transferring units of connection time for a communication network (R1) having a first accounting and/or billing equipment (ECF1), said device comprising i) memory means (BD) capable of storing data defining look-up tables associating identifiers of donor communication terminals (TD) with at least one identifier of a beneficiary communication terminal (TB) potentially connected to another communication network (R1; R2) and indicating that a donor is authorizing the usage by a beneficiary terminal (TB) of an emergency unit transfer request procedure whenever its account no longer has sufficient units to perform a normal unit transfer request, said emergency procedure being charged to the donor account and proceeding without any prior authorization procedure, and ii) processing means MT designed, whenever a request is received from a beneficiary terminal (TB) associated with a beneficiary account that does not have a sufficient number of units to enable it to perform a normal unit transfer request, said request being a request to transfer a chosen quantity of units of connection time for the benefit of said beneficiary account as part of an emergency procedure, and said request being associated with the communication identifier of said beneficiary communication terminal (TB), to determine within said memory means (BD) the communication identifier of a donor terminal (TD) connected to said communication network (R1) and authorizing said beneficiary terminal (TB) to benefit from said emergency procedure, then to access said first accounting and/or billing equipment (ECF1) managing the donor account associated with the communication identifier of said donor terminal (TD), in order to verify whether the quantity of connection time units which said donor terminal (TD) has is equal to or greater than said chosen quantity, and if so, to authorize the implementation of the emergency procedure and to order said first equipment (ECF1) and potentially one other accounting and/or billing equipment (ECF1; ECF2) managing said beneficiary account to proceed with a real-time transfer of a quantity of units of connection time equal to or less than said chosen quantity from the donor account to the beneficiary account, and to debit said donor account by a quantity of units of connection time corresponding to the cost of said emergency procedure.

2. A device according to claim 1, **characterized in that** said look-up tables (BD) have data indicating that a donor is authorizing transfers of units for the benefit of any communication terminal.

3. A device according to one of the claims 1 and 2, **characterized in that** said look-up tables (BD) contain data representative of the quantity of units of connection time that can be transferred to every beneficiary account.

4. A device according to claim 3, **characterized in that** said look-up tables (BD) contain data representative of the quantity of units of connection time that can be transferred to each beneficiary account either during a chosen period of time or upon each request to transfer units.

5. A device according to one of the claims 1 to 4, **characterized in that** said look-up tables (BD) contain data indicating that a donor is authorizing transfers of units for the benefit of a beneficiary account without any prior authorization request procedure.

6. A device according to one of the claims 1 to 5, **characterized in that** said look-up tables (BD) contain data indicating that a donor is authorizing transfers of units for the benefit of a beneficiary account after a prior authorization request procedure.

7. A device according to one of the claims 1 to 6, **characterized in that** said look-up tables (BD) contain data indicating that a donor is not authorizing the communication to a beneficiary terminal (TB) of the identifier of its donor terminal (TD) and/or its name.

8. A device according to one of the claims 1 to 7, **characterized in that** said processing means (MT) are designed to handle a request for a transfer of units that comes from a donor terminal (TD) and designates at least one beneficiary terminal (TB) and a chosen quantity of units.

9. A device according to one of the claims 1 to 8, **characterized in that** said processing means (MT) are designed to handle a request for a transfer of units that comes from a beneficiary terminal (TB) and designates a chosen quantity of units.

10. A device according to claim 9, **characterized in that** said processing means (MT) are designed, whenever they receive a request to transfer a chosen quantity of units not designating any donor terminal (TD) identifier and coming from a beneficiary terminal (TB) whose identifier is associated in said look-up table (BD) with at least two identifiers of donor communication terminals, to offer the requesting beneficiary terminal (TB) to select one of said donor terminals.

11. A device according to claim 10, **characterized in that** said processing means (MT) are designed to pick among several possible donor terminals at least one of them based on at least one chosen criterion, so as to propose to said requesting beneficiary terminal (TB) each donor terminal that meets each chosen criterion.

12. A device according to claim 11, **characterized in that** said criteria are chosen from among a group having at least a communication terminal availability, a level of priority, and a quantity of units available.

13. A device according to one of the claims 9 to 12, **characterized in that** said processing means (MT) are designed to reject a request for a transfer of units in the event of refusal by the selected donor terminal (TD) or in the absence of any response from the selected donor terminal (TD) within a period over and above a chosen threshold.

14. A device according to one of the claims 9 to 13, **characterized in that** said processing means (MT) are designed, if a donor terminal (TD) agrees to transfer a quantity of units less than said chosen quantity, to order the transfer of the approved quantity of units from the account of the donor to the account of the beneficiary, potentially after sending the beneficiary terminal (TB) a request for approval related to said approved quantity of units and after receiving approval from said donor terminal (TD).

15. A device according to one of the claims 9 to 14, **characterized in that** said processing means (MT) are designed, when they receive a request to transfer units that comes from a beneficiary terminal (TB), to access the accounting and/or billing equipment (ECF1; ECF2) managing the account of said beneficiary terminal (TB), and to authorize said transfer whenever the quantity of units stored in said beneficiary account is less than a chosen threshold.

16. A device according to one of the claims 9 to 15, **characterized in that** said processing means (MT) are designed to order the accounting and/or billing equipment (ECF1) managing the account of the donor terminal (TD) to debit that account by the quantity of units of connection time that corresponds to the cost of the communication initiated by said beneficiary terminal (TB), without debiting the account of said beneficiary terminal (TB), so that said communication is charged to the donor terminal (DT).

17. A device according to one of the claims 1 to 16, **characterized in that** said processing means (MT) are designed, when the quantity of units available in the account of the donor terminal (TD) involved in said transfer is less than said chosen quantity, to send said donor terminal (TD) an offer to buy units of connection time, and if said donor terminal (TD) agrees, to send the accounting and/or billing equipment (ECF1) managing the account of the donor terminal (TD) a request to allocate a specified quantity of units to that account, bill said donor, and then order said transfer of units.

18. A device according to one of the claims 1 to 17, **characterized in that** whenever a transfer of units requires the prior approval of the donor terminal (TD), said processing means (MT) are designed to order said transfer of units if said approval from the donor terminal (TD) is accompanied by a confidential password.

19. A device according to one of the claims 1 to 18, **characterized in that** said processing means (MT) are designed to handle requests to transfer units coming in the form of telephone calls, SMS messages, electronic messages, or electronic services.

20. A device according to one of the claims 1 to 19, **characterized by** the fact that said processing means (MT) are designed to communicate with said donor terminals (TD) and/or beneficiary terminals (TB) by means of SMS messages.

21. A device according to one of the claims 1 to 20, **characterized in that** said donor terminals (TD) and beneficiary terminals (TB) are connected to the same network (R1) belonging to an operator, and said donor account and beneficiary account are managed by the same accounting and/or billing equipment (ECF1) accessible by a communication identifier.

22. A device according to one of the claims 1 to 21, **characterized in that** said donor terminals (TD) and beneficiary terminals (TB) are connected to different networks (R1, R2) belonging to different operators, and said donor account and beneficiary account are managed by different accounting and/or billing equipment (ECF1, ECF2) accessible by different communication identifiers.

23. A method of transferring units of connection time, said method consisting of i) storing within memory means (BD) data defining look-up tables associating identifiers of donor communication terminals (TD) with at least one beneficiary communication terminal identifier (TB) connected to a communication network (R1; R2) and indicating that a donor is authorizing the usage by a beneficiary terminal (TB) of an emergency unit transfer request procedure whenever its account no longer has sufficient units to perform a normal unit transfer request, said emergency procedure being charged to the donor account and proceeding without any prior authorization procedure, and ii) whenever a request is received from a beneficiary terminal (TB) associated with a beneficiary account that does not have a sufficient number of units to enable it to perform a normal unit transfer request, said request being a request to transfer a chosen quantity of units of connection time for the benefit of said beneficiary account as part of an emergency procedure, and said request being associated with the communication identifier of said beneficiary communication terminal (TB), to determine within said memory means (BD) the communication identifier of a donor terminal (TD) connected to a potential other communication network (R1) and authorizing said beneficiary terminal (TB) to benefit from said emergency procedure, then to access said first accounting and/or billing equipment (ECF1) managing the donor account associated with the communication identifier of said donor terminal (TD), in order to verify whether the quantity of connection time units which said donor terminal (TD) has is equal to or greater than said chosen quantity, and if so, to authorize the implementation of the emergency procedure and to order said first equipment (ECF1) and potentially one other accounting and/or billing equipment (ECF1; ECF2) managing said beneficiary account to proceed with a real-time transfer of a quantity of units of connection time equal to or less than said chosen quantity from the donor account to the beneficiary account, and to debit said donor account by a quantity of units of connection time corresponding to the cost of said emergency procedure,

## Patentansprüche

1. Vorrichtung (D) zur Steuerung der Übertragung von Telefoneinheiten für ein Kommunikationsnetz (R1), welche eine erste Verbuchungs- und/oder Abrechnungseinrichtung (ECF1) umfasst, wobei die Vorrichtung umfasst: i) geeignete Speichermittel (BD) zum Speichern von Daten, welche Korrespondenztabellen zwischen den Kennungen von Sender-Kommunikationsendgeräten (TD) und mindestens einer Kennung des Empfänger-Kommunikationsendgeräts (TB), welches an ein eventuelles anderes Kommunikationsnetz (R1; R2) angeschlossen ist , definieren und signalisieren, dass ein Sender die Benutzung, durch ein Empfänger-Endgerät (TB), eines Dringlichkeitsverfahrens für die Anforderung einer Übertragung von Einheiten genehmigt, wenn dessen Konto nicht mehr über genügend Einheiten verfügt, um eine normale Anforderung einer Übertragung von Einheiten zu tätigen, wobei das besagte Dringlichkeitsverfahren dem Sender-Konto belastet wird und ohne vorheriges Genehmigungsanforderungsverfahren erfolgt, sowie ii) Verarbeitungsmittel (MT), um im Fall des Empfangs, von einem Empfänger-Kommunikationsendgerät (TB), welches einem Empfängerkonto zugeordnet ist, das nicht über eine ausreichende Anzahl von Einheiten verfügt, um eine normale Anforderung für die Übertragung von Einheiten auf seine Kosten zu tätigen, einer Anforderung für die Übertragung einer gewählten Anzahl von Telefoneinheiten zugunsten des besagten Empfängerkontos im Rahmen eines Dringlichkeitsverfahrens, welches der Kennung des besagten Empfängerendgeräts (TB) zugeordnet ist, um in den besagten Speichermitteln (BD) die Kennung eines an das besagte Kommunikationsnetz (R1) angeschlossenen Sender-Endgeräts (TD) zu bestimmen und dem besagten Empfänger-Endgerät (TB) die Benutzung des besagten Dringlichkeitsverfahrens zu genehmigen, und um anschließend auf die besagte erste Verbuchungs- und/oder Abrechnungseinrichtung (ECF1), welche das der Kennung des besagten Sender-Endgeräts (TD) zugeordnete Senderkonto verwaltet, um zu prüfe, ob die Menge der Telefoneinheiten, über welche das Sender-Endgerät (TD) verfügt, mindestens der besagten gewählten Menge entspricht, und um im Ja-Fall die Durchführung des Dringlichkeitsverfahrens zu genehmigen und der besagten ersten Einrichtung (ECF1) und einer eventuellen anderen Verbuchungs- und/oder Abrechnungseinrichtung (ECF1; ECF2), welche das besagte Empfängerkonto verwaltet, zu befehlen, die Übertragung vom Senderkonto an das Empfängerkonto einer höchstens der besagten gewählten Menge entsprechenden Menge von Telefoneinheiten in Echtzeit auszuführen und das besagte Senderkonto mit einer den Kosten für das besagte Dringlichkeitsverfahren entsprechenden Menge von Telefoneinheiten zu belasten.

2. Vorrichtung nach Anspruch 1, **dadurch gekennzeichnet, dass** die besagten Korrespondenztabellen (BD) Daten enthalten, welche signalisieren, dass ein Sender die Übertragung von Einheiten zugunsten eines beliebigen Kommunikationsendgeräts genehmigt.

3. Vorrichtung nach einem der Ansprüche 1 und 2, **dadurch gekennzeichnet, dass** die besagten Korrespondenztabellen (BD) Daten enthalten, welche die Menge von Telefoneinheiten, die an jedes Empfänger-Konto übermittelt werden kann, darstellen.

4. Vorrichtung nach Anspruch 3, **dadurch gekennzeichnet, dass** die besagten Korrespondenztabellen (BD) Daten enthalten, welche die Menge von Telefoneinheiten, die an jedes Empfänger-Konto entweder während einer gewählten Zeitspanne oder für jede Anforderung einer Übertragung von Einheiten Übermittelt werden kann, darstellen.

5. Vorrichtung nach einem der Ansprüche 1 bis 4, **dadurch gekennzeichnet, dass** die besagten Korrespondenztabellen (BD) Daten enthalten, welche signalisieren, dass ein Sender Übertragungen von Einheiten zugunsten eines Empfängerkontos ohne vorherige Genehmigungsanfrageverfahren genehmigt.

6. Vorrichtung nach einem der Ansprüche 1 bis 5, **dadurch gekennzeichnet, dass** die besagten Korrespondenztabellen (BD) Daten enthalten, welche signalisieren, dass ein Sender Übertragungen von Einheiten zugunsten eines Empfängerkontos im Anschluss an eine vorherige Genehmigungsanfrage genehmigt.

7. Vorrichtung nach einem der Ansprüche 1 bis 6, **dadurch gekennzeichnet, dass** die besagten Korrespondenztabellen (BD) Daten enthalten, welche signalisieren, dass ein Sender nicht die Mitteilung der Kennung seines Sender-Endgeräts (TD) und/oder seines Namens an ein Empfänger-Endgerät (TB) genehmigt.

8. Vorrichtung nach einem der Ansprüche 1 bis 7, **dadurch gekennzeichnet, dass** die besagten Verarbeitungsmittel (MT) fähig sind, eine von einem Sender-Endgerät (TD) gesendete Anforderung für die Übertragung von Einheiten, welche mindestens ein Empfänger-Endgerät (TB) und die gewählte Menge von Einheiten angibt, zu verarbeiten.

9. Vorrichtung nach einem der Anspruche 1 bis 8, **dadurch gekennzeichnet, dass** die besagten Verarbeitungsmittel (MT) fähig sind, eine von einem Empfänger-Endgerät (TB) gesendete Anforderung für die Übertragung von Einheiten, welche die gewählte Menge von Einheiten angibt, zu verarbeiten.

10. Vorrichtung nach Anspruch 9, **dadurch gekennzeichnet, dass** die besagten Verarbeitungsmittel (MT) fähig sind, bei Empfang einer Anforderung für die Übertragung von einer gewählten Menge von Einheiten, welche keine Kennung eines Sender-Endgeräts (TD) angibt und von einem Empfänger-Endgerät (TB) kommt, dessen Kennung in der besagten Korrespondenztabelle (BD) mindestens zwei Kennungen von Sender-Verbmdungsendgeräten zugeordnet ist, dem anfragenden Empfänger-Endgerät (TB) anzubieten, eines der besagten Sender-Endgeräten auszuwählen.

11. Vorrichtung nach Anspruch 10, **dadurch gekennzeichnet, dass** die besagten Verarbeitungsmittel (MT) fähig sind, unter mehreren möglichen Sender-Endgeräten gemäß mindestens einem gewählten Kriterium mindestens ein Sender-Endgerät zu bestimmen, um dem besagten anfragenden Empfänger-Endgerät (TB) jedes Sender-Endgerät, welches das gewählte Kriterium prüft, anzubieten.

12. Vorrichtung nach Anspruch 11, **dadurch gekennzeichnet, dass** die besagten Kriterien in einer Gruppe gewählt werden, welche mindestens eine Verfügbarkeit eines Kommunikationsendgeräts, eine Prioritätsstufe und eine Menge von verfügbaren Einheiten umfasst.

13. Vorrichtung nach einem der Ansprüche 9 bis 12, **dadurch gekennzeichnet, dass** die besagten Verarbeitungsmittel (MT) fähig sind, im Falle der Verweigerung des gewählten Sender-Endgeräts (TD) oder in Abwesenheit einer Antwort des gewählten Sender-Endgeräts (TD) nach Ablauf einer gewählten Zeitgrenze eine Anforderung zur Übertragung von Einheiten abzulehnen.

14. Vorrichtung nach einem der Ansprüche 9 bis 13, **dadurch gekennzeichnet, dass** die besagten Verarbeitungsmittel (MT) fähig sind, im Falle der Genehmigung eines Sender-Endgeräts (TD) für die Übertragung einer Menge von Einheiten, die niedriger ist als die besagte gewählte Menge, die Übertragung der dem Senderkonto genehmigten Menge von Einheiten an das Empfängerkonto, eventuell nach Senden einer die besagte genehmigte Menge von Einheiten betreffende Genehmigungsanfrage an das Empfänger-Endgerät (TB) und nach Empfang einer Genehmigung des Sender-Endgeräts (TD) zu befehlen.

15. Vorrichtung nach einem der Ansprüche 9 bis 14, **dadurch gekennzeichnet, dass** die besagten Verarbeitungsmittel (MT) fähig sind, nach Empfang einer Anfrage für die Übertragung von Einheiten vom Empfänger-Endgerät (TB) auf die Verbuchungs- und/oder Abrechnungseinrichtung (ECF1; ECF2), welche das Konto des besagten Empfänger-Endgeräts (TB) verwaltet, zuzugreifen und die besagte Übertragung zu genehmigen, wenn die im besagten Empfängerkonto gespeicherte Menge von Einheiten niedriger ist als die gewählte Grenze.

16. Vorrichtung nach einem der Ansprüche 9 bis 15, **dadurch gekennzeichnet, dass** die besagten Verarbeitungsmittel (MT) fähig sind, der Buchhaltungs- und-oder Rechnungsstellungseinrichtung (ECF1), welche das Konto des Sender-Endgeräts (TD) verwaltet, zu befehlen, dieses Konto mit einer Menge von Telefoneinheiten, welche den Kosten für die von dem besagten Empfänger-Endgerät (TB) initiierte Verbindung entspricht, zu belasten, ohne dass das Konto des besagten Empfänger-Endgeräts (TB) belastet wird, so dass die besagte Verbindung zu Lasten des Sender-Endgeräts (TD) geht.

17. Vorrichtung nach einem der Ansprüche 1 bis 16, **dadurch gekennzeichnet, dass** die besagten Verarbeitungsmittel (MT) fähig sind, dem besagten Sender-Endgerät (TD) ein Angebot für den Kauf von Telefoneinheiten zu senden, wenn die Menge von auf dem Konto des Sender-Endgeräts (TD), welches an der besagten Übertragung beteiligt ist, verfügbaren Einheiten niedriger ist, als die gewählte Menge, und im Fall der Genehmigung des besagten Sender-Endgeräts (TD) der Verbuchungs- und/oder Abrechnungseinrichtung (ECF1), welche das Konto des besagten Sender-Endgeräts (TD) verwaltet, eine Anfrage für das Zuteilen auf dieses Konto einer spezifizierten Menge von Telefoneinheiten auf Rechnung des besagten Senders zu senden und anschließend die Übertragung von Telefoneinheiten zu befehlen.

18. Vorrichtung nach einem der Ansprüche 1 bis 17, **dadurch gekennzeichnet, dass** die besagten Verarbeitungsmittel (MT), wenn eine Übertragung von Einheiten von einer vorherigen Genehmigung des Sender-Endgeräts (TD) abhängig ist, fähig sind, die besagte Übertragung von Einheiten zu befehlen, wenn die besagte Genehmigung des Sender-Endgerätes (TD) ein vertrauliches Passwort enthält.

19. Vorrichtung nach einem der Ansprüche 1 bis 18, **dadurch gekennzeichnet, dass** die besagten Verarbeitungsmittel (MT) fähig sind, Anfragen für die Übertragung von Einheiten, welcher in der Form eines Anrufs, einer Kurznachricht vom Typ SMS, einer elektronischen Nachricht oder eines elektronischen Dienstes getätigt werden, zu bearbeiten.

20. Vorrichtung nach einem der Ansprüche 1 bis 19, **dadurch gekennzeichnet, dass** die besagten Verarbeitungsmittel (MT) fähig sind, mit den besagten Sender-Endgeräten (TD) und/oder Empfänger-Endgeräten (TB) anhand von Kurznachrichten vom Typ SMS zu kommunizieren.

21. Vorrichtung nach einem der Ansprüche 1 bis 20, **dadurch gekennzeichnet, dass** die besagten Sender-Kommunikationsendgeräte (TD) und Empfänger-Kommunikationsendgeräte (TB) an ein selbes einem Dienstanbieter gehörendes Netz (R1) angeschlossen sind, und dadurch, dass die besagten Sender- und Empfängerkonten von einer selben Verbuchungs- und/oder Abrechnungseinrichtung (ECF1), welche über eine Kommunikationskennung zugänglich ist, verwaltet werden.

22. Vorrichtung nach einem der Ansprüche 1 bis 21, **dadurch gekennzeichnet, dass** die besagten Sender-Kommunikationsendgeräte (TD) und Empfänger-Kommunikationsendgeräte (TB) an verschiedene, verschiedenen Dienstanbietern gehörende Netze (R1, R2) angeschlossen sind, und dadurch, dass die besagten Sender- und Empfängerkonten von verschiedenen Verbuchungs- und/oder Abrechnungseinrichtung (ECF1, ECF2), welche über verschiedene Kommunikationskennunsen zugänglich sind, verwaltet wird.

23. Verfahren zur Übertragung von Telefoneinheiten, wobei das Verfahren darin besteht: i) in Speichermitteln (BD) Daten zu speichern, welche Korrespondenztabellen zwischen Kennungen von Sender-Kommunikationsendgeräten (TD) und mindesten einer Kennung des Empfänger-Kommunikationsendgeräts (TB), welches an ein Kommunikationsnetz (R1; R2) angeschlossen ist, definieren und signalisieren, dass ein Sender die Benutzung, durch ein Empfänger-Endgerät (TB), eines Dringlichkeitsverfahrens für die Anforderung einer Übertragung von Einheiten genehmigt, wenn dessen Konto nicht mehr über genügend Einheiten verfügt, um eine normale Anforderung einer Übertragung von Einheiten zu tätigen, wobei das besagte Dringlichkeitsverfahren dem Sender-Konto belastet wird und ohne vorheriges Genehmigungsanforderungsverfahren erfolgt, sowie ii) Verarbeitungsmittel (MT), um im Fall des Empfangs, von einem Empfänger-Kommunikationsendgerät (TB), welches einem Empfängerkonto zugeordnet ist, das nicht über eine ausreichende Anzahl von Einheiten verfügt, um eine normale Anforderung für die Übertragung von Einheiten auf seine Kosten au tätigen, einer Anforderung für die Übertragung einer gewählten Anzahl von Telefoneinheiten zugunsten des besagten Empfängerkontos im Rahmen eines Dringlichkeitsverfahrens, welches der Kennung des besagten Empfängerendgeräts (TB) zugeordnet ist, um in den besagten Speichermitteln (BD) die Kennung eines an das besagte Kommunikationsnetz (R1) angeschossenen Sender-Endgeräts (TD) zu bestimmen und dem besagten Empfänger-Endgerät (TB) die Benutzung des besagten Dringlichkeitsverfahrens zu genehmigen, und um anschließend auf die besagte erste Verbuchungs- und/oder Abrechnungseinrichtung (ECF1), welche das der Kennung des besagten Sender-Endgeräts (TD) zugeordnete Senderkonto verwaltet, um zu prüfen, ob die Menge der Telefoneinheiten, über welche das Sender-Endgerät (TD) verfügt, mindestens der besagten gewählten Menge entspricht, und um im Ja-Fall die Durchführung des Dringlichkeitsverfahrens zu genehmigen und der besagten ersten Einrichtung (ECF1) und einer eventuellen anderen Verbuchungs- und/oder Abrechnungseinrichtung (ECF1; ECF2), welche das besagte Empfängerkonto verwaltet, zu befehlen, die Übertragung vom Senderkonto an das Empfängerkonto einer höchstens der besagten gewählten Menge entsprechenden Menge von Telefoneinheiten in Echtzeit auszuführen und das besagte Senderkonto mit einer den Kosten für das besagte Dringlichkeitsverfahren entsprechenden Menge von Telefoneinheiten zu belasten.
